(19) **Europäisches Patentamt**
**European Patent Office**
**Office européen des brevets**

(11)  **EP 3 005 241 B1**

(12)  **EUROPEAN PATENT SPECIFICATION**

(45) Date of publication and mention
of the grant of the patent:
**12.07.2017 Bulletin 2017/28**

(51) Int Cl.:
***G06K 19/067*** (2006.01)   ***G06K 19/077*** (2006.01)
***G08B 13/24*** (2006.01)

(21) Application number: **14728245.3**

(22) Date of filing: **28.05.2014**

(86) International application number:
**PCT/GB2014/051617**

(87) International publication number:
**WO 2014/195678 (11.12.2014 Gazette 2014/50)**

(54)  **RADIO FREQUENCY DETECTABLE DEVICE**

FUNKFREQUENZERKENNBARE VORRICHTUNG

DISPOSITIF DÉTECTABLE PAR RADIOFRÉQUENCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.06.2013 GB 201309920**

(43) Date of publication of application:
**13.04.2016 Bulletin 2016/15**

(73) Proprietor: **The University Of Exeter
Exeter, Devon EX4 4QJ (GB)**

(72) Inventors:
• **HICKEN, Robert James
Exeter EX2 4LA (GB)**

• **KEATLEY, Paul Steven
Exeter EX5 7AR (GB)**
• **HIBBINS, Alastair Paul
Exminster EX6 8FG (GB)**

(74) Representative: **Somervell, Thomas Richard
Marks & Clerk LLP
Alpha Tower
Suffolk Street
Queensway
Birmingham B1 1TT (GB)**

(56) References cited:
**WO-A1-2007/144574    US-A1- 2009 058 757
US-B1- 6 229 444**

**Description**

This invention relates to a device, the presence of which can be detected by the use of a radio frequency electromagnetic field.

Radio frequency (RF) security or tracking devices, sometimes referred to (and referred to herein) as tags, are used in a range of applications, for instance for security, stock control or for product tracking in a production environment. Some radio frequency tags include an antenna that is responsive to an excitation radio frequency electromagnetic field (provided by a reader/interrogator), and in response provide an output electromagnetic response signature that is detectable by the reader. In radio frequency identification, each tag may have a characteristic signature response that may be used to identify and track different stock items. In security applications, it may be sufficient for each tag to have a similar response, so that the movement of any stock item with a functioning tag past a reader may be detected. Tags on stock items that have been purchased may be rendered non-functional (for instance by mechanical damage) at the point of sale.

In some applications, passive tags are used that do not include a source of electrical power but instead derive power for the electromagnetic response from the input electromagnetic field. Such tags may include an electronic chip or circuit operable to remodulate a signal to be subsequently transmitted by the tag. In other applications, active tags that include an electrical power source may be used.

Radio frequency tags are generally configured to operate at a specific frequency, or frequency range. Some examples of frequencies that have been used in radio frequency tags are 8.2MHz and 13.56MHz for high frequency (HF) tags; and 868-870MHz and 902-928MHz for ultra high frequency (UHF) tags.

Some radio frequency tags, for example certain UHF tags, include an antenna for converting the incident electromagnetic field into an electrical signal, for example for powering an associated electronic circuit, and for converting an electrical signal in the tag into the response signature. In HF tags, a resonant circuit is typically used, in which an inductive coil antenna is connected in parallel with a capacitor to form an inductor/capacitor (LC) resonator with a natural frequency that corresponds to the frequency of operation. This parallel arrangement of the inductance and capacitance results in the voltage across the inductor and capacitor being at a maximum at the resonant frequency, with the current at a minimum. The impedance of the parallel LC circuit is at a maximum at the resonant frequency. The value of the resonant frequency $f_r$ for an LC resonator is given by the well known formula:

$$f_r = \frac{1}{2\pi\sqrt{LC}} \tag{1}$$

The inductance L of the coil and the capacitance C of the thin film capacitor are therefore selected accordingly to give a resonant frequency at the frequency of operation of the tag.

In many applications it is desirable for RF tags to be small and/or unobtrusive. HF security tags are typically low profile, comprising a thin film planar inductor coil and a thin film capacitor. Such low profile tags may take the form of self adhesive labels that can readily be applied to various items, for instance under existing labels. Furthermore, such low profile tags are easily rendered inoperable at the point of sale, for instance by punching a hole through the coil to break its continuity or by damaging the tag by inducing excessive voltages or currents therein.

A problem with conventional planar coil HF tags occurs when they are mounted on a conducting surface, for instance, on a metal container, or proximate polarisable liquids such as spirits, as may be the case when used on packaging for such liquids. The planar coil antenna is excited only by magnetic fields normal to the plane of the coil. As a consequence of Lenz's Law, magnetic fields normal to the plane of a conducting package produce eddy currents within the package that largely cancel the field, thereby preventing excitation of a planar coil placed flat on a conducting surface. These induced eddy currents beneath the tag within the conducting surface or polarisable liquid prevent the tag antenna from functioning properly, and mean that the tag either does not provide a signature response that is detectable by a reader, or that the response is attenuated making detection of the response problematic.

One known method for overcoming this problem is to attach an HF tag to a conducting package in a 'flag' orientation, in which the plane of the coil is normal to the conducting surface. The coil may subsequently be excited by a magnetic field parallel to the surface of the conductor, and normal to the coil. Such flag tags are not low profile, and are far more obvious and prone to subsequent damage or removal (deliberate or accidental). A further alternative is to place the tag on a spacer element which may comprise a foam layer with low electrical conductivity and high magnetic permeability. Although this approach improves the excitation of the tag, the tag response remains attenuated, with a considerably reduced read distance. Furthermore, the spacer element must be relatively thick in order to achieve acceptable performance.

An alternative to a planar coil in a flag orientation is to use a device comprising a helical solenoid with a ferrite core, and arranging for the axis of the solenoid to be parallel with the conducting surface. These may be relatively expensive to manufacture. Furthermore, deactivation thereof may be difficult.

US6229444 and WO2007/144574 describe tags in the form of resonant circuits. US622944 discloses a radio frequency detectable device having the features defined in the preamble of claim 1. It is an objective of the invention to overcome or ameliorate at least some of the forgoing problems, and/or to provide a useful alternative to existing solutions.

According to the invention, there is provided a radio frequency detectable device comprising two electrically connected metallic cavity regions, the cavity regions in combination having an associated distributed inductance and distributed capacitance, wherein a first one of the cavity regions is defined between a pair of plates of relatively large plate separation and is loaded with a ferrite material, the first cavity region having a relatively large distributed inductance, and wherein a second one of the cavity regions is defined by a pair of plates of relatively small plate separation and is filled with a dielectric, the second cavity region having a relatively large distributed capacitance, and wherein the second cavity region is wound around the first cavity region to form a circuit with resonant frequency corresponding with an operating frequency of a reader.

The device may be arranged so that the cavity regions together have a quarter wave mode resonance corresponding with the operating frequency of the reader.

The first cavity region may comprise two substantially parallel conductors that are electrically connected at one end.

The second cavity region may comprise a laminate wrapped around at least part of the first cavity region, the laminate comprising an insulating layer and a conducting layer.

The laminate is preferably wrapped around the first cavity region a plurality of times. As a result, the operating frequency is reduced compared to the frequency of a planar cavity alone.

The operating frequency of the tag is preferably within the HF or UHF band. The operating frequency may be, for example, approximately 8.2MHz or 13.56MHz. Alternatively, it may be approximately 868-870MHz or 902-928MHz.

The invention will now be described, by way of example, with reference to the accompanying drawings, in which:

Figure 1 shows a planar cavity configured as a quarter wave resonator;

Figure 2 shows the magnetic field from a radio frequency cavity at resonance;

Figure 3 shows a nested pair of resonators, connected to an electrical excitation source;

Figure 4 shows the charge distribution on the nested pair of resonators of Figure 3 at resonance;

Figure 5 is a schematic of an embodiment of the invention;

Figure 6 is a schematic of an alternative embodiment of the invention;

Figure 7 is a schematic of a further, currently preferred, alternative embodiment of the invention;

Figure 7a is a perspective view, partially broken away, illustrating the embodiment of Figure 7;

Figure 7b is a graph illustrating the response of the embodiment of Figure 7;

Figure 8 is photograph of an embodiment of the invention next to two prior art tags;

Figure 9 is a further photograph of an embodiment of the invention next to two prior art tags; and

Figure 10 is a photograph showing an embodiment of the invention functioning with a tag reader.

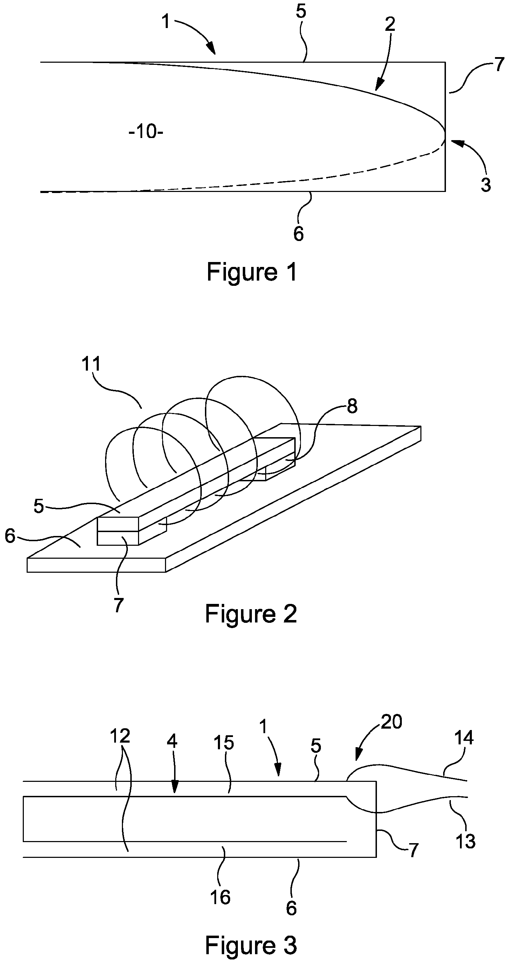

Figure 1 shows a planar cavity 1 configured as a quarter wave resonator. It can be viewed as, effectively, a cross-sectional view of the planar cavity shown in Figure 2 and described below. In this arrangement, two adjacent substantially parallel conducting rectangular plates 5, 6 are joined at one end by a conducting wall 7, with a gap 10 therebetween. The electrical connection between the ends of the plates 5, 6 adjacent to the wall 7 means that the electrical potential at this end of the plates must be substantially equal, and therefore that no electrical field exists at this end of the plate. This results in a node 3 in the electric field 2 adjacent to the wall 7, and means that the fundamental electrical field mode is a quarter wavelength between the plates 5, 6.

The connected parallel plate structure 5, 6, 7 can be modelled as a parallel inductor and capacitor. At resonance, the electrical field between the adjacent parallel plates 5, 6 results in a capacitance, and the flow of current back and forth around the loop of the plates results in a magnetic field and therefore an inductance. The resonant frequency of the cavity 1 can thereby be determined using equation (1), based on the effective capacitance and inductance of the structure. It follows from this formula that increasing the effective capacitance or inductance will result in a reduced resonant frequency. For the basic structure of Figure 1, the inductance and capacitance are both dependant on the geometry of the cavity, and an increase in one will tend to result in a decrease in the other. For instance, decreasing the gap between the plates results in an increase in capacitance, but decreases the effective inductance due to a decrease in the area of the inductive loop. The resonant frequency of known arrangements of this form are very high, of the order of the speed of light divided by their length (~several gigahertz for cm-sized structures), and such structures have previously been applied in microwave and millimetre wave radio filters and absorbers.

Figure 2 depicts a 3 dimensional view of the planar cavity of Figure 1 in which the conducting wall comprises a copper support 7 at a first end of the upper metal plate 5, electrically connecting it to the lower metal plate 6. The second end of the upper metal plate 5 is supported by an insulating plastic spacer 8. The alternating current around the loop of the structure in a quarter wave resonant mode results in the generation of a magnetic field 11 around the structure, which is a maximum close to the copper support 7. The magnetic field produced by the structure at resonance corresponds to the magnetic field required to excite the cavity. As Figure 2 shows, the excitation field is parallel to the plane of the cavity, and the cavity can thereby readily be excited when it is placed on a metal package, in contrast to planar coils which require an excitation field normal to the plane of the coil.

Figure 3 depicts a radio frequency device 20 comprising an outer part 1 with a further inner part 4 placed within the cavity of the outer part 1. The inner part 4 has first and second substantially parallel plates 15, 16, corresponding with the first and second plates 5, 6, of the outer part 1. The respective pairs of corresponding plates 5, 15 and 6, 16 are substantially parallel, with a small gap 12 therebetween. A relatively large capacitance is thereby created between the plates 5, 6 of the outer part and the plates 15, 16 of the inner part, increasing the effective capacitance of the resonator. The inductive loop of the device 20 is substantially unaffected, remaining a loop around the inner part 4. The resonant frequency of the inner part 4 is substantially reduced by the additional capacitance. Alternatively, the reduced frequency can be viewed as being a consequence of the increased cavity length and hence the longer wavelength mode confined therein. A first electrical connection 13 is shown to an end of the inner part 4 adjacent to the wall 7 of the outer part 1, and a second electrical connection 14 to the wall 7 of the outer part 1. The wired connections 13, 14 do not impact upon the operation of the device 20, but may permit exploration of the operation and properties thereof.

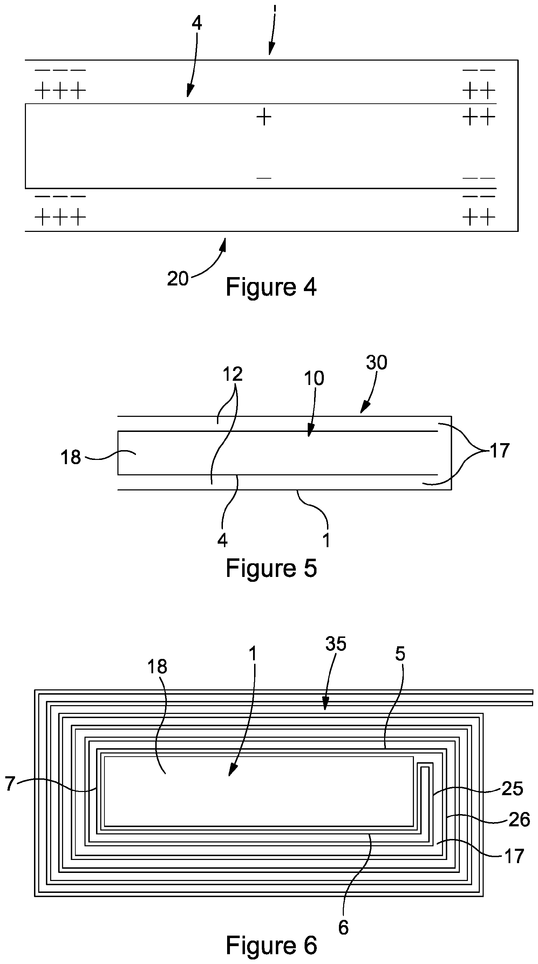

Figure 4 is a simplified diagram showing the instantaneous distribution of charge in the cavity 20 of Figure 3 at resonance. The capacitance arises from the opposing charges on the plates 5, 6, 15, 16 and the electric field that arises therefrom, and the inductance from the current along the surfaces of the conductors, from regions with a positive charge to areas with a negative charge as the charge distribution oscillates.

The resonant frequency of such a structure still tends to be impractically high for use in an HF device or tag, and it is necessary to further reduce the resonant frequency for such use.

Figure 5 shows a radio frequency device 30 according to embodiment of the invention, comprising an inner part 4 and an outer part 1, with a dielectric material 17 disposed in the gap 12 between the plates of the inner and outer part, and a loading material 18 comprising a ferrite disposed in a first cavity region 10 between the plates of the inner part 4. The plate length, in this embodiment, is 16cm and the cavity gap 10 is 4mm. The capacitive gap 12 is 25$\mu$m. It will be appreciated, however, that these dimensions are merely examples and that a range of other sizes are possible.

The dielectric material 17 has a relative permittivity of greater than 1, and supports the adjacent plates of the inner and outer parts 4, 1 in close proximity, allowing a very small gap 12 therebetween defined by the thickness of the material 17. The reduced gap 12 and increased permittivity enabled by the dielectric material 17 results in a greatly increased capacitance. The dielectric material 17 may comprise any suitable material, for example a plastics material film such as polyester, polystyrene, or polyvinylchloride. In this embodiment it comprises PTFE.

The loading material 18 is selected to have a high magnetic permeability at the operating frequency of the device 30, thereby increasing the inductance of the first cavity region. A device or tag of practicable dimensions having a resonant frequency corresponding with the operating frequency of existing tag systems (for example 8.2MHz or 13.56MHz) can thereby be produced.

The loading material 18, in this embodiment, comprises a NiZn ferrite named "F16" from MMG India Pvt Ltd and MagDev Ltd. However, it will be appreciated that other materials may be used without departing from the scope of the invention.

The resonant frequency of the device 30 was found to be 17MHz. Although this frequency does not correspond with currently used RF tag frequencies, it is suitable for a HF RF tag. The skilled person will appreciate that this approach enables an operating frequency corresponding with an existing HF or UHF tag frequency.

Although a material comprising a ferrite is presently considered to be the only practical option, in principle, any material with an appropriate combination of material properties can be used to load the cavity of the resonator. The loading material must have a high magnetic permeability at the operating frequency, and have low losses. The skilled person will appreciate that losses may arise from a number of material properties, such as eddy current loss resulting from electrical conductivity, hysteresis loss resulting from hysteretic reorientation of magnetization, or precessional damping.

In this arrangement, it will be appreciated that the inner part 4 defines the first cavity part or region, loaded with a ferrite material and possessing a relatively large distributed inductance. The inner and outer parts 1, 4 together define the second cavity region or part located around the distributed inductance, which possesses a relatively large distributed capacitance. As the inner conductor is common to both cavity regions, they are clearly electrically connected.

Figure 6 shows an alternative embodiment of the invention, comprising a first cavity region or cavity part 1, surrounded by a second cavity region or structure 35. The first cavity 1 again comprises first and second plates 5, 6, end wall 7, and loading material 18 comprising a ferrite. The first and second plates 5, 6 are respectively connected to the plates 25, 26 of the second cavity region or structure 35, and the embodiment thereby comprises the first cavity 1 which possesses a large distributed inductance, connected in series with a second cavity region 35 which possesses a large distributed capacitance. The first and second walls 25, 26 of cavity 35 are laminated together and wrapped around the first cavity 1 in successive layers. Each electrode 25, 26 has an adjacent underlying dielectric layer 17, to separate the first and second cavity electrodes 25, 26, and to prevent a short circuit between successive layers of lamination wrapped around the first cavity 1.

The capacitance of the second cavity structure 35 arises from the mutual capacitance between the first and second electrode 25, 26. The large area and small gap results in a relatively high capacitance, and the wound configuration minimises the length of the device, whilst enabling the use of capacitor plates or electrodes 25, 26 of large effective area. The cavity structure 35 may readily be tailored to adjust the resonant frequency of the device to suit the application, for example by varying the number of layers wrapped around the cavity.

It will be appreciated that the cavity structure 35 may alternatively be wound anticlockwise rather than clockwise around the cavity 1.

Following this approach, a single lamination comprising a continuous single conductor may be used to form both the plates 5, 6 and wall 7 of the cavity 1, and the first and second capacitor electrodes 25, 26.

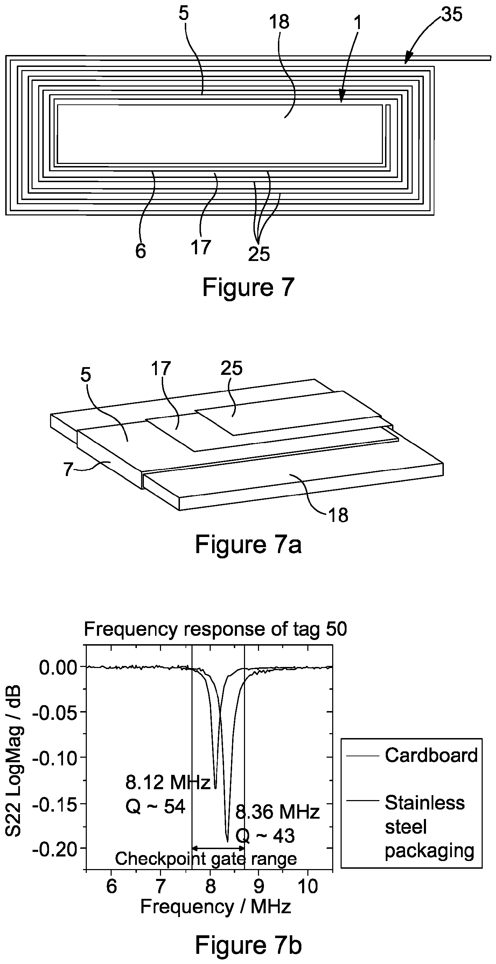

Figures 7 and 7a show a further alternative embodiment, similar to that of Figure 6, comprising a cavity structure 35 wrapped around a cavity 1. In this embodiment, the second cavity structure comprises a first capacitor electrode 25, connected to the first plate 5, and the second, separate, capacitor electrode is omitted. The windings of the first capacitor electrode 25 are again laminated together with an underlying dielectric layer 17, which ensures that successive conductor layers are separated by a small gap.

In the arrangement of Figures 7 and 7a, the ferrite material 18 is of dimensions 48mm long, 30mm wide and 1.5mm thick. The material used is 'F16' ferrite from MMG India Pvt Ltd and MagDev Ltd. The dielectric material 17 is an acrylic lacquer supplied by Crown Technologies UK plc and is of thickness approximately 3μm. The electrode 25 (which also serves as the plates 5, 6 and wall 7) is of 19 μm thick Al foil. The width of the cavity structure 35 is less than that of the ferrite 18 to optimise operation of the device. Such a structure has been found to have a resonant frequency of approximately 8.12MHz in free space, and 8.36MHz when located upon a stainless steel material package, as shown in Figure 7b, and when used as a security tag is capable of triggering a reader at a range of 90cm under a range of orientations. The graph illustrates the frequency read range of a typical reader, and both resonant frequencies fall within this range. Clearly, therefore, the embodiment is capable of being detected when mounted upon or positioned adjacent to a range of materials, for example both when positioned upon wooden or cardboard packaging and when positioned upon a metallic packaging substrate.

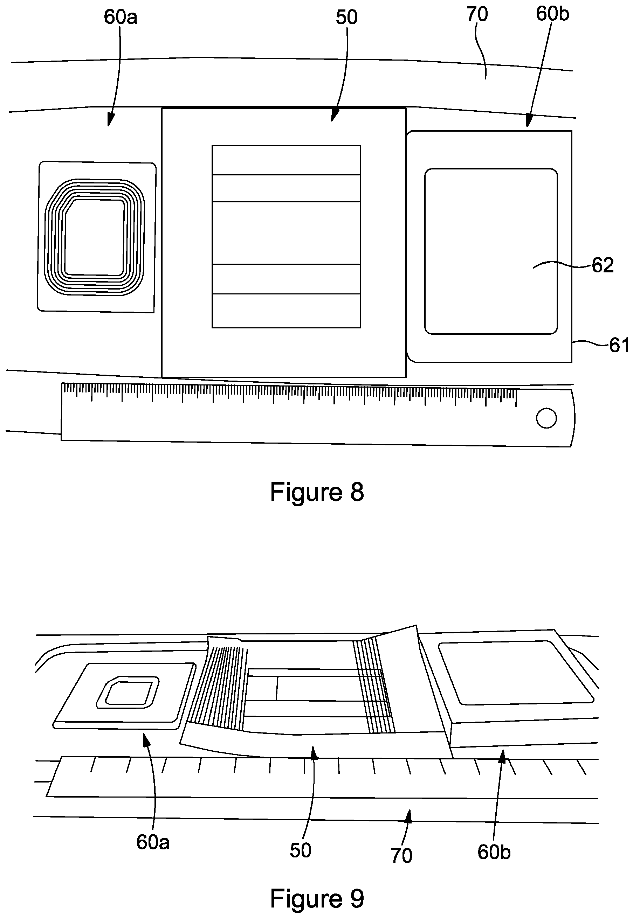

For convenience, the device may be heat sealed within a plastics material enclosure, for example as illustrated in Figures 8 and 9 referenced below. The sealed structure has a thickness of 1.97mm.

In order to minimise the detuning observed in Figure 7b, the device is conveniently mounted upon a substrate, for example a 50x50mm$^2$ dielectric substrate of thickness 8 μm laminated to an Al foil material of thickness 60 μm. In this way the operation of the tag is made less sensitive to the composition of the packaging beneath the tag.

Figure 8 shows a tag 50 according to an embodiment of the invention placed on a metal conductor 70, adjacent to a first and second arrangement 60a, 60b, each including a prior art security tag 62, comprising a planar coil with an operating frequency of 8.2MHz. The second arrangement 60b has a foam element 61 with a thickness of approximately 1cm, designed to enable the tag 62 to operate on the metal conductor 70 by elevating it above the surface.

The relative proportions of the tag 50 according to an embodiment of the invention and the prior art tag arrangements 60a, 60b are more clearly shown in Figure 9. The tag 50 has a much smaller thickness than the prior art tag arrangement 60b. The thick foam layer was previously necessary to enable the tag 62 to be detected on metal, albeit with reduced detection range. The tag arrangement 60a is not detectable on metal 70 due to induced eddy currents, as previously discussed.

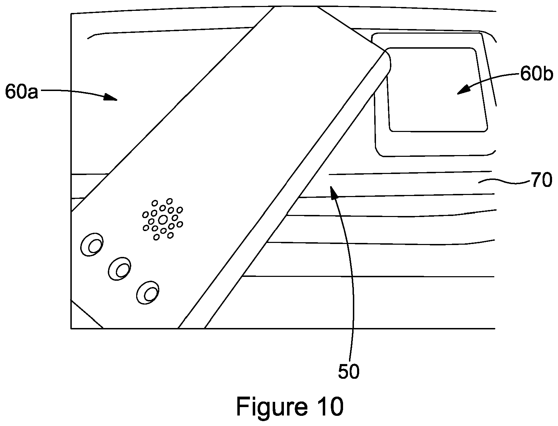

Figure 10 shows a handheld prior art reader/interrogator with an operating frequency of 8.2MHz being used to successfully detect a tag 50 according to an embodiment of the invention on a metal surface. This shows that the embodiment is suitable for use as an HF security tag, and is compatible with the existing infrastructure used to detect such tags. The tag 60a would not be detected, and whilst the tag 60b may be detected, as described above this is achieved by requiring the presence of the foam layer, undesirably increasing the thickness of the tag.

It is expected that further refinement of the invention will enable even smaller tags, with lower profile, having the same advantageous properties.

Although example embodiments have been given with an emphasis on HF tags, it will be appreciated that the present invention may alternatively be applied to produce a UHF tag. Similarly, although embodiments have been compared to prior art security tags, it will be appreciated that in some embodiments, the tag may be an RFID tag.

A tag has been disclosed that is low cost, compact and which is capable of functioning when placed directly onto a conducting surface. The tag may readily be designed to operate at existing HF and UHF tag frequencies while remaining highly compact. An early prototype tag according to an embodiment of the invention has been demonstrated to be detectable on metallic packaging, and on non-conducting substrates, at a 90cm read distance using a commercial gate system supplied by Checkpoint Inc and by an existing handheld security tag interrogator.

Problems with prior art approaches to overcoming the problem of reading radio frequency tags on metal such as configuring planar coils as flag tags and using foam spacers have been overcome. Furthermore, embodiments of the invention are more cost effective than tags comprising a ferrite loaded solenoid.

Although planar radio frequency cavities have been described, it will be appreciated that the cavities do not have to be strictly planar, and that curved cavities are envisaged as within the scope of the invention.

It will be appreciated that a wide range of modifications and alterations may be made to the arrangements described herein without departing from the scope of the invention, as defined in the appended claims.

## Claims

1. A radio frequency detectable device comprising two electrically connected metallic cavity regions (1, 35), the cavity regions (1, 35) in combination having an associated distributed inductance and distributed capacitance, wherein a first one of the cavity regions (1) is defined between a pair of plates (5, 6) of relatively large plate separation and is loaded with a ferrite material (18), the first cavity region (1) having a relatively large distributed inductance, and wherein a second one of the cavity regions (35) is defined by a pair of plates (25,26) of relatively small plate separation and is filled with a dielectric (17), the second cavity region (35) having a relatively large distributed capacitance, and **characterised in that** the second cavity region (35) is wound around the first cavity region (1) to form a circuit with a resonant frequency corresponding with an operating frequency of a reader.

2. The device of claim 1, wherein the first cavity region (1) is a planar cavity.

3. The device of any preceding claim, wherein the pair of plates of the first cavity region (1) comprises two substantially parallel conductors that are electrically connected at one end.

4. The device of any preceding claim, wherein the second cavity region (35) comprises a laminate wrapped around at least part of the first cavity region (1), the laminate comprising an insulating layer and a conducting layer.

5. The device of claim 4, wherein the laminate is wrapped around the first cavity region (1) a plurality of times.

6. The device of any preceding claim, wherein the device is arranged so that the cavity regions (1, 35) together support a quarter wave mode resonance corresponding with the operating frequency of the reader.

7. The device of any preceding claim, wherein the operating frequency is within the HF or UHF band.

8. The device of claim 7, wherein the operating frequency is approximately 8.2MHz or 13.56MHz.

9. The device of claim 7, wherein the operating frequency is approximately 868-870MHz or 902-928MHz.

10. The device according to any of the preceding claims, further comprising a shielding substrate.

11. The device of claim 10, wherein the shielding substrate comprises a dielectric substrate laminated to a metallic foil.

## Patentansprüche

1. Durch Funkfrequenz erkennbare Vorrichtung, die zwei elektrisch verbundene metallische Hohlraumbereiche (1, 35) umfasst, wobei die Hohlraumbereiche (1, 35) in Kombination eine zugeordnete verteilte Induktivität und verteilte Kapazität haben, wobei ein erster der Hohlraumbereiche (1) zwischen einem Paar von Platten (5, 6) mit einem verhältnismäßig großen Plattenabstand definiert wird und mit einem Ferritmaterial (18) geladen ist, wobei der erste Hohlraumbereich (1) eine verhältnismäßig große verteilte Induktivität hat, und wobei ein zweiter der Hohlraumbereiche (35) durch ein Paar von Platten (25, 26) mit einem verhältnismäßig kleinen Plattenabstand definiert wird und mit einem Dielektrikum (17) gefüllt ist, wobei der zweite Hohlraumbereich (35) eine verhältnismäßig große verteilte Kapazität hat, und **dadurch gekennzeichnet, dass** der zweite Hohlraumbereich (35) um den ersten Hohlraumbereich (1) gewickelt ist, um einen Schaltkreis mit einer Resonanzfrequenz, die einer Betriebsfrequenz eines Lesegeräts entspricht, zu bilden.

2.  Vorrichtung nach Anspruch 1, wobei der erste Hohlraumbereich (1) ein ebener Hohlraum ist.

3.  Vorrichtung nach einem der vorhergehenden Ansprüche, wobei das Paar von Platten des ersten Hohlraumbereichs (1) zwei im Wesentlichen parallele Leiter umfasst, die an einem Ende elektrisch verbunden sind.

4.  Vorrichtung nach einem der vorhergehenden Ansprüche, wobei der zweite Hohlraumbereich (35) ein Laminat umfasst, das um wenigstens einen Teil des ersten Hohlraumbereichs (1) gewickelt ist, wobei das Laminat eine isolierende Schicht und eine leitende Schicht umfasst.

5.  Vorrichtung nach Anspruch 4, wobei das Laminat mehrere Male um den ersten Hohlraumbereich (1) gewickelt ist.

6.  Vorrichtung nach einem der vorhergehenden Ansprüche, wobei die Vorrichtung so angeordnet ist, dass die Hohlraumbereiche (1, 35) zusammen eine Viertelwellenmodus-Resonanz stützen, die der Betriebsfrequenz des Lesegeräts entspricht.

7.  Vorrichtung nach einem der vorhergehenden Ansprüche, wobei die Betriebsfrequenz innerhalb des HF- oder des UHF-Bandes liegt.

8.  Vorrichtung nach Anspruch 7, wobei die Betriebsfrequenz ungefähr 8,2 MHz oder 13,56 MHz beträgt.

9.  Vorrichtung nach Anspruch 7, wobei die Betriebsfrequenz ungefähr 868 bis 870 MHz oder 902 bis 928 MHz beträgt.

10. Vorrichtung nach einem der vorhergehenden Ansprüche, die ferner ein Abschirmungssubstrat umfasst.

11. Vorrichtung nach Anspruch 10, wobei das Abschirmungssubstrat ein auf eine metallische Folie laminiertes dielektrisches Substrat umfasst.


## Revendications

1.  Dispositif détectable par radiofréquence, comprenant deux régions de cavité métalliques connectées électriquement (1, 35), les régions de cavité (1, 35) présentant en combinaison une inductance distribuée associée et une capacité distribuée, dans lequel une première des régions de cavité (1) est définie entre une paire de plaques (5, 6) à séparation relativement grande des plaques et chargée par un matériau de ferrite (18) ;
la première région de cavité (1) présentant une inductance distribuée relativement grande, et dans lequel une deuxième des régions de cavité (35) est définie par une paire de plaques (25, 26) à séparation relativement réduite des plaques et est chargée d'un matériau diélectrique (17), la deuxième région de cavité (35) présentant une capacité distribuée relativement grande, et **caractérisé en ce que** la deuxième région de cavité (35) est enroulée autour de la première région de cavité (1) pour former un circuit avec une fréquence de résonance correspondant à une fréquence opérationnelle d'un lecteur.

2.  Dispositif selon la revendication 1, dans lequel la première région de cavité (1) est une cavité plane.

3.  Dispositif selon l'une quelconque des revendications précédentes, dans lequel la paire de plaques de la première région de cavité (1) comprend deux conducteurs sensiblement parallèles connectés électriquement au niveau d'une extrémité.

4.  Dispositif selon l'une quelconque des revendications précédentes, dans lequel la deuxième région de cavité (35) comprend un stratifié enveloppé autour d'au moins une partie de la première région de cavité (1), le stratifié comprenant une couche isolante et une couche conductrice.

5. Dispositif selon la revendication 4, dans lequel le stratifié est enveloppé autour de la première région de cavité (1) à plusieurs reprises.

6. Dispositif selon l'une quelconque des revendications précédentes, dans lequel le dispositif est agencé de sorte que les régions de cavité (1, 35) supportent ensemble une résonance en mode quart d'onde correspondant à la fréquence opérationnelle du lecteur.

7. Dispositif selon l'une quelconque des revendications précédentes, dans lequel la fréquence opérationnelle est comprise dans la bande HF ou UHF.

8. Dispositif selon la revendication 7, dans lequel la fréquence opérationnelle correspond à environ 8,2 MHz ou à 13,56 MHz.

9. Dispositif selon la revendication 7, dans lequel la fréquence opérationnelle est comprise entre environ 8678 et 870 MHz ou entre 902 et 928 MHz.

10. Dispositif selon l'une quelconque des revendications précédentes, comprenant en outre un substrat de protection.

11. Dispositif selon la revendication 10, dans lequel le substrat de protection comprend un substrat diélectrique stratifié sur une feuille métallique.

Figure 1

Figure 2

Figure 3

Figure 4

Figure 5

Figure 6

Figure 7

Figure 7a

Figure 7b

Figure 8

Figure 9

Figure 10

**REFERENCES CITED IN THE DESCRIPTION**

**Patent documents cited in the description**

- US 6229444 B
- WO 2007144574 A
- US 622944 A